# EUROPEAN PATENT APPLICATION

(11) **EP 4 760 930 A1**
(43) Date of publication of application: **17.06.2026**
(21) Application number: 24854214.4
(22) Date of filing: 13.08.2024
(51) Int. Cl.: H01M 50/262, H01M 50/249

(54) **RESTRAINT TOOL, BATTERY SYSTEM, AND FLYING BODY**

(30) Priority: 15.08.2023 JP 2023132369
(71) Applicant: Softbank Corp., Tokyo 105-7529 (JP)
(72) Inventor: SAITO, Takaya, Tokyo 105-7529 (JP); TAKAYANAGI, Yoshiki, Tokyo 105-7529 (JP); FUKUCHI, Svetlana, Tokyo 105-7529 (JP); YAMAMOTO, Ryoichi, Tokyo 112-0003 (JP); ENOMOTO, Miki, Tokyo 112-0003 (JP)
(74) Representative: Dilg, Haeusler, Schindelmann Patentanwaltsgesellschaft mbH
(86) International application number: PCT/JP2024/028944
(87) International publication number: WO 2025/037625

(57) **Abstract**

There is provided a restraint tool which restrains a lithium metal battery including a plurality of battery cells, including: a restraint member which includes: a plate-shaped member which is made of a rubber material and include a plate-shaped base and a plurality of protrusions on the base; and a frame member into which the plate-shaped member is fitted; and a fixing member which fixes the plate-shaped member fitted into the frame member in a pressurized state in which the plate-shaped member is pressed against the lithium metal battery. **In** the restraint tool, due to elasticity of the plate-shaped member, a pressure applied by the restraint tool to the plurality of battery cells in charging the plurality of battery cells is 5 MPa or less, and a pressure applied by the restraint tool to the plurality of battery cells in discharging the plurality of battery cells is 0.1 MPa or more.

## Description

### TECHNICAL FIELD

The present invention relates to a restraint tool, a battery system, and a flying body.

### BACKGROUND ART

Patent Document 1 describes that, in a lithium-ion battery, a plurality of stacked battery cells are clamped by metal plates, and a restraint pressure in a stacking direction is applied to the battery cells by restraining the metal plates with a metal band.

### RELATED ART DOCUMENT

### Patent Document

Patent Document 1: Japanese Patent Application Publication No. 2022-075152

### GENERAL DISCLOSURE

According to an embodiment of the present invention, a restraint tool is provided. The restraint tool may restrain a lithium metal battery including a plurality of battery cells. The restraint tool may include a restraint member. The restraint member may include a plate-shaped member which is made of a rubber-based material and includes a plate-shaped base and a plurality of protrusions on the base; and a frame member into which the plate-shaped member is fitted. The restraint tool may include a fixing member which fixes the plate-shaped member fitted into the frame member in a pressurized state in which the plate-shaped member is pressed against the lithium metal battery.

In the restraint tool, each of the plurality of protrusions may have a conical shape. Each of the plurality of protrusions may have a conical shape with a height-to-diameter ratio ranging from 1:1 to 1:5. Each of the plurality of protrusions may have a conical shape with a height-to-diameter ratio of 1:3. The plurality of protrusions may have a curved shape on a vertex side thereof. The plurality of protrusions may have a planar shape on a vertex side thereof. A diameter of a bottom surface of the plurality of protrusions may be from 5 mm to 30 mm.

In the any restraint tool described above, a protrusion which has a rectangular shape and includes a cut in its central portion along a longitudinal direction of the base, and a protrusion which has a rectangular shape and includes a cut in its central portion along a lateral direction of the base may be alternately arranged on the base.

Due to elasticity of the plate-shaped member of the any restraint tool described above, a pressure applied by the restraint tool to the plurality of battery cells in charging the plurality of battery cells may be 5 Mpa or less, and a pressure applied by the restraint tool to the plurality of battery cells in discharging the plurality of battery cells may be 0.1 MPa or more. The restraint tool is configured by adjusting a rubber type of a material of the plate-shaped member, a shape, number, and arrangement of the plurality of protrusions of the plate-shaped member, and fixing force of the fixing member so that, due to elasticity of the plate-shaped member, a pressure applied by the restraint tool to the plurality of battery cells in charging the plurality of battery cells is 5 Mpa or less, and a pressure applied by the restraint tool to the plurality of battery cells in discharging the plurality of battery cells is 0.1 MPa or more. A pressure applied by the restraint tool to the plurality of battery cells in charging the plurality of battery cells may be 3 MPa or less. A pressure applied by the restraint tool to the plurality of battery cells in charging the plurality of battery cells may be 2 MPa or less. A pressure applied by the restraint tool to the plurality of battery cells in discharging the plurality of battery cells may be 0.3 MPa or more. A pressure applied by the restraint tool to the plurality of battery cells in discharging the plurality of battery cells may be 0.5 MPa or more.

In the any restraint tool described above, the restraint member may include a first restraint member which includes a first plate-shaped member and a first frame member, and a second restraint member which includes a second plate-shaped member and a second frame member. The fixing member may fix the lithium metal battery in a pressurized state in which the lithium metal battery is sandwiched by the first restraint member and the second restraint member. A gap between each of the plurality of protrusions may be from 0.05 to 0.3 of an area of the base. A gap between each of the plurality of protrusions may be from 0.1 to 0.2 of an area of the base. A material of the plate-shaped member may be ethylene propylene diene monomer.

According to an embodiment of the present invention, there is provided a battery system including the restraint tool and the lithium metal battery. According to an embodiment of the present invention, there is provided a flying body including the battery system and a propulsion force generation device which utilizes electric energy accumulated in the battery system to generate propulsion force.

The summary clause does not necessarily describe all necessary features of the embodiments of the present invention. In addition, the present invention may also be a sub-combination of the features described above.

### BRIEF DESCRIPTION OF THE DRAWINGS

FIG. 1 schematically illustrates an example of a battery system 10.
FIG. 2 schematically illustrates an example of the battery system 10.
FIG. 3 schematically illustrates an example of a plate-shaped member 212.
FIG. 4 schematically illustrates an example of a frame member 218.
FIG. 5 schematically illustrates an example of the plate-shaped member 212.
FIG. 6 schematically illustrates an example of the plate-shaped member 212.
FIG. 7 schematically illustrates an example of a HAPS 700 in which the battery system 10 is installed.

### DESCRIPTION OF EXEMPLARY EMBODIMENTS

The present invention will be described below by way of embodiments of the invention, but the following embodiments are not intended to limit the invention according to the claims. **In** addition, not all combinations of features described in the embodiments are necessarily essential to a solution of the invention.

A lithium-ion battery can achieve a sufficient battery characteristic when it is restrained under no or low pressure on the order of 0.0 to 0.2 MPa. However, it was found that, when a lithium metal battery is restrained at a pressure similar to that of the lithium-ion battery, its cycle life decreases. Although the cycle life can increase when restraint pressure is increased with a method such as metal plate restraint which restrains with a metal plate, the restraint member becomes heavier, resulting in a decrease in weight energy density. **In** addition, since the metal plate restraint fails to adjust pressure appropriately, the restraint pressure applied to the lithium metal battery, which changes its thickness due to charging/discharging, may become excessive or insufficient. A restraint tool 200 according to the present embodiment has a structure which has light weight compared to the metal plate restraint, and the like, and can adjust the restraint pressure applied to the lithium metal battery appropriately when the lithium metal battery changes its thickness due to charging/discharging.

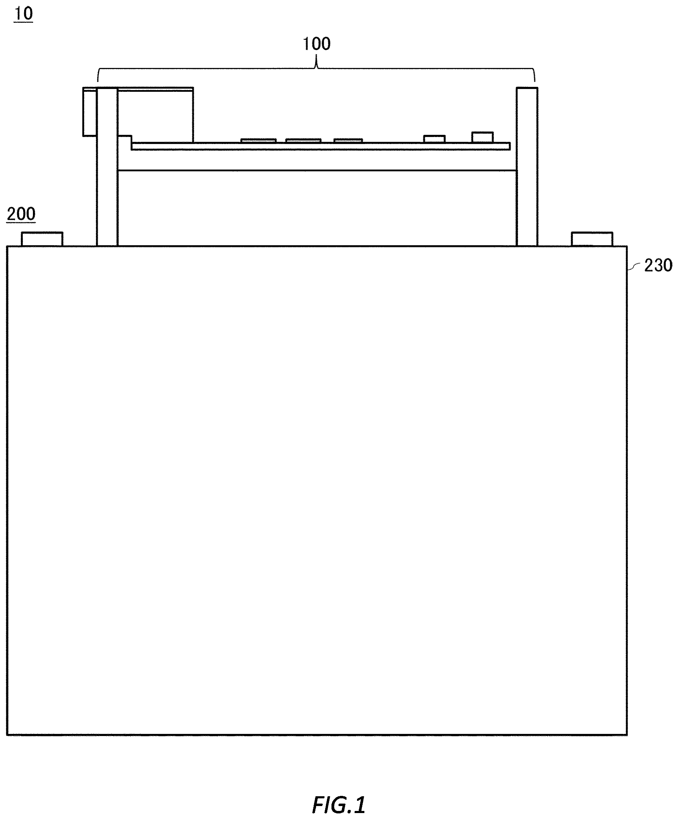

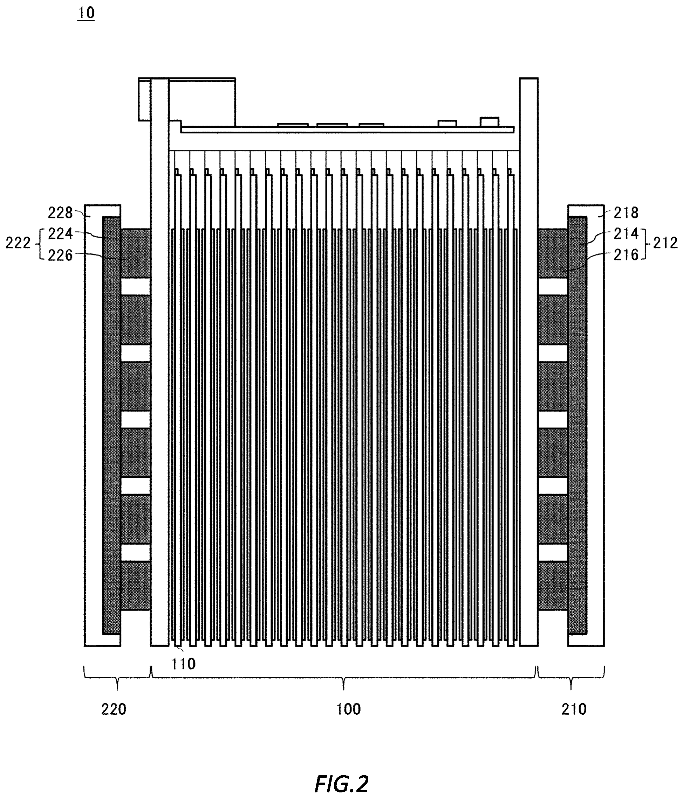

FIG. 1 and FIG. 2 schematically illustrate an example of a battery system 10. The battery system 10 includes a lithium metal battery 100 and the restraint tool 200. The lithium metal battery 100 includes a plurality of battery cells 110. The plurality of battery cells 110 are arranged side by side.

The restraint tool 200 restrains the lithium metal battery 100. The restraint tool 200 may restrain the lithium metal battery 100 along a direction in which the plurality of battery cells 110 are aligned.

In an example illustrated in FIG. 1 and FIG. 2, the restraint tool 200 includes a restraint member 210, a restraint member 220, and a fixing member 230. The restraint member 210 may be an example of a first restraint member. The restraint member 220 may be an example of a second restraint member. The fixing member 230 fixes the lithium metal battery 100 in a pressurized state in which the lithium metal battery 100 is sandwiched by the restraint member 210 and the restraint member 220.

The restraint tool 200 may include only one of the restraint member 210 or the restraint member 220. For example, the restraint tool 200 only includes the restraint member 210 out of the restraint member 210 and the restraint member 220. In this case, on a side of the lithium metal battery 100 opposite a side on which the restraint member 210 is positioned, a member, which is formed of a material with relatively high hardness and relatively light weight, such as carbon fiber reinforced plastics, or CFRP, for example, is arranged. The fixing member 230 fixes the restraint member 210 in a pressurized state in which the restraint member 210 is pressed against the lithium metal battery 100. The fixing member 230 may fix the lithium metal battery 100 in a pressurized state where the lithium metal battery 100 is sandwiched by a member which is arranged on a side of the lithium metal battery 100 opposite a side on which the restraint member 210 is positioned, and the restraint member 210.

The present embodiment mainly describes a case where the restraint tool 200 includes the restraint member 210 and the restraint member 220, as an example.

The restraint member 210 includes a plate-shaped member 212 and a frame member 218. The plate-shaped member 212 may be an example of a first plate-shaped member. The frame member 218 may be an example of a first frame member.

The plate-shaped member 212 is made of a rubber-based material. A specific example of the material of the plate-shaped member 212 includes ethylene propylene diene monomer, or EPDM, but is not limited thereto. Another example includes natural rubber, styrene butadiene rubber, nitrile rubber, butyl rubber, chloroprene rubber, chlorosulfonated polyethylene rubber, acrylic rubber, silicone rubber, fluorocarbon rubber, and the like, but the material may not be limited thereto.

The plate-shaped member 212 includes a plate-shaped base 214 and a plurality of protrusions 216 on the base 214. The base 214 may be an example of a first base. Each protrusion 216 may be an example of a first protrusion. The plurality of protrusions 216 may have a configuration which applies pressure to the lithium metal battery 100 as uniformly as possible and is less likely to buckle. A gap between each of the plurality of protrusions 216 may be from 0.05 to 0.3 of an area of the base 214. The gap between each of the plurality of protrusions 216 may be from 0.1 to 0.2 of the area of the base 214.

The plate-shaped member 212 is fitted into the frame member 218. The frame member 218 includes a depression into which the plate-shaped member 212 is fitted. The frame member 218 may be formed of a material with relatively high hardness and relatively light weight. An example of the material of the frame member 218 includes CFRP, but is not limited thereto.

The restraint member 220 includes a plate-shaped member 222 and a frame member 228. The restraint member 220 has a configuration similar to that of the restraint member 210. The plate-shaped member 222 may be an example of a second plate-shaped member. The frame member 228 may be an example of a second frame member.

The plate-shaped member 222 is made of a rubber-based material. A specific example of the material of the plate-shaped member 222 includes ethylene propylene diene monomer, but is not limited thereto. Another example includes natural rubber, styrene butadiene rubber, nitrile rubber, butyl rubber, chloroprene rubber, chlorosulfonated polyethylene rubber, acrylic rubber, silicone rubber, fluorocarbon rubber, and the like, but the material may not be limited thereto.

The plate-shaped member 222 includes a plate-shaped base 224 and a plurality of protrusions 226 on the base 224. The base 224 may be an example of a second base. Each protrusion 226 may be an example of a second protrusion. The plurality of protrusions 226 may have a configuration which applies pressure to the lithium metal battery 100 as uniformly as possible and is less likely to buckle.

The plate-shaped member 222 is fitted into the frame member 228. The frame member 228 includes a depression, into which the plate-shaped member 222 is fitted. The frame member 228 may be formed of a material with relatively high hardness and relatively light weight. An example of the material of the frame member 228 includes CFRP, but is not limited thereto.

The fixing member 230 may be any member, as long as it can fix the lithium metal battery 100 in a pressurized state in which the lithium metal battery 100 is sandwiched by the restraint member 210 and the restraint member 220. For example, the fixing member 230 may be a box-shaped member formed of a material with relatively high hardness and relatively light weight, such as CFRP.

Due to elasticity of the plate-shaped member 212 of the restraint member 210 and elasticity of the plate-shaped member 222 of the restraint member 220, the restraint member 210, the restraint member 220, and the fixing member 230 are configured such that a pressure applied by the restraint tool 200 to the plurality of battery cells **110** is 5 MPa or less in charging the plurality of battery cells **110** of the lithium metal battery 100, and a pressure applied by the restraint tool 200 to the plurality of battery cells 110 is 0.1 MPa or more in discharging the plurality of battery cells 110. In other words, the restraint member 210, the restraint member 220, and the fixing member 230 are configured such that even when a thickness of the lithium metal battery 100 changes due to charging/discharging, the pressure applied to the lithium metal battery 100 falls within 0.1 MPa to 5 MPa. Specifically, the restraint tool 200 is configured by adjusting a rubber type of the plate-shaped member 212, a shape, number, and arrangement of the plurality of protrusions 216 of the plate-shaped member 212, a rubber type of the plate-shaped member 222, a shape, number, and arrangement of the plurality of protrusions 226 of the plate-shaped member 222, and fixing force by the fixing member 230 to achieve such pressure. For example, the restraint tool 200 according to the present embodiment can be generated by generating the restraint tool 200 in different variations in which some or all of the rubber type of the plate-shaped member 212, the shape, number, and arrangement of the plurality of protrusions 216 of the plate-shaped member 212, the rubber type of the plate-shaped member 222, the shape, number, and arrangement of the plurality of protrusions 226 of the plate-shaped member 222, and the fixing force of the fixing member 230 are changed, actually restraining the lithium metal battery 100 by the generated restraint tool 200, measuring, by a load cell and the like, the pressure applied to the lithium metal battery 100 in charging/discharging the lithium metal battery 100, and adopting the restraint tool 200 which causes the pressure applied to the lithium metal battery 100 to fall within 0.1 MPa to 5 MPa.

Similarly, due to the elasticity of the plate-shaped member 212 of the restraint member 210 and the elasticity of the plate-shaped member 222 of the restraint member 220, the restraint member 210, the restraint member 220, and the fixing member 230 may be configured such that the pressure applied by the restraint tool 200 to the plurality of battery cells 110 is 3 MPa or less in charging the plurality of battery cells 110 of the lithium metal battery 100, and the pressure applied by the restraint tool 200 to the plurality of battery cells 110 is 0.1 MPa or more in discharging the plurality of battery cells 110.

Similarly, due to the elasticity of the plate-shaped member 212 of the restraint member 210 and the elasticity of the plate-shaped member 222 of the restraint member 220, the restraint member 210, the restraint member 220, and the fixing member 230 may be configured such that the pressure applied by the restraint tool 200 to the plurality of battery cells 110 in charging the plurality of battery cells 110 of the lithium metal battery 100 is 2 MPa or less, and the pressure applied by the restraint tool 200 to the plurality of battery cells 110 is 0.1 MPa or more in discharging the plurality of battery cells 110.

Similarly, due to the elasticity of the plate-shaped member 212 of the restraint member 210 and the elasticity of the plate-shaped member 222 of the restraint member 220, the restraint member 210, the restraint member 220, and the fixing member 230 may be configured such that the pressure applied by the restraint tool 200 to the plurality of battery cells 110 in charging the plurality of battery cells 110 of the lithium metal battery 100 is 5 MPa or less, and the pressure applied by the restraint tool 200 to the plurality of battery cells 110 is 0.3 MPa or more in discharging the plurality of battery cells 110.

Similarly, due to the elasticity of the plate-shaped member 212 of the restraint member 210 and the elasticity of the plate-shaped member 222 of the restraint member 220, the restraint member 210, the restraint member 220, and the fixing member 230 may be configured such that the pressure applied by the restraint tool 200 to the plurality of battery cells 110 is 3 MPa or less in charging the plurality of battery cells 110 of the lithium metal battery 100, and the pressure applied by the restraint tool 200 to the plurality of battery cells 110 is 0.3 MPa or more in discharging the plurality of battery cells 110.

Similarly, due to the elasticity of the plate-shaped member 212 of the restraint member 210 and the elasticity of the plate-shaped member 222 of the restraint member 220, the restraint member 210, the restraint member 220, and the fixing member 230 may be configured such that the pressure applied by the restraint tool 200 to the plurality of battery cells 110 is 2 MPa or less in charging the plurality of battery cells 110 of the lithium metal battery 100, and the pressure applied by the restraint tool 200 to the plurality of battery cells 110 is 0.3 MPa or more in discharging the plurality of battery cells 110.

Similarly, due to the elasticity of the plate-shaped member 212 of the restraint member 210 and the elasticity of the plate-shaped member 222 of the restraint member 220, the restraint member 210, the restraint member 220, and the fixing member 230 may be configured such that the pressure applied by the restraint tool 200 to the plurality of battery cells 110 is 5 MPa or less in charging the plurality of battery cells 110 of the lithium metal battery 100, and the pressure applied by the restraint tool 200 to the plurality of battery cells 110 is 0.5 MPa or more in discharging the plurality of battery cells 110.

Similarly, due to the elasticity of the plate-shaped member 212 of the restraint member 210 and the elasticity of the plate-shaped member 222 of the restraint member 220, the restraint member 210, the restraint member 220, and the fixing member 230 may be configured such that the pressure applied by the restraint tool 200 to the plurality of battery cells 110 is 3 MPa or less in charging the plurality of battery cells 110 of the lithium metal battery 100, and the pressure applied by the restraint tool 200 to the plurality of battery cells 110 is 0.5 MPa or more in discharging the plurality of battery cells 110.

Similarly, due to the elasticity of the plate-shaped member 212 of the restraint member 210 and the elasticity of the plate-shaped member 222 of the restraint member 220, the restraint member 210, the restraint member 220, and the fixing member 230 may be configured such that the pressure applied by the restraint tool 200 to the plurality of battery cells 110 is 2 MPa or less in charging the plurality of battery cells 110 of the lithium metal battery 100, and the pressure applied by the restraint tool 200 to the plurality of battery cells 110 is 0.5 MPa or more in discharging the plurality of battery cells 110.

When the restraint tool 200 only includes the restraint member 210 out of the restraint member 210 and the restraint member 220, due to the elasticity of the plate-shaped member 212 of the restraint member 210, the restraint member 210 and the fixing member 230 may be configured such that the pressure applied by the restraint tool 200 to the plurality of battery cells 110 is 5 MPa or less in charging the plurality of battery cells 110 of the lithium metal battery 100, and the pressure applied by the restraint tool 200 to the plurality of battery cells 110 is 0.1 MPa or more in discharging the plurality of battery cells 110. In other words, the restraint member 210 and the fixing member 230 are configured such that even when a thickness of the lithium metal battery 100 changes due to charging/discharging, the pressure applied to the lithium metal battery 100 falls within 0.1 MPa to 5 MPa. Specifically, the restraint tool 200 is configured by adjusting the rubber type of the plate-shaped member 212, the shape, number and arrangement of the plurality of protrusions 216 of the plate-shaped member 212, and the fixing force of the fixing member 230 to achieve such pressure. For example, the restraint tool 200 according to the present embodiment can be generated by generating the restraint tool 200 in different variations in which some or all of the rubber type of the plate-shaped member 212, the shape, number, and arrangement of the plurality of protrusions 216 of the plate-shaped member 212, and the fixing force of the fixing member 230 are changed, actually restraining the lithium metal battery 100 by the generated restraint tool 200, measuring, by a load cell and the like, the pressure applied to the lithium metal battery 100 in charging/discharging the lithium metal battery 100, and adopting the restraint tool 200 which causes the pressure applied to the lithium metal battery 100 to fall within 0.1 MPa to 5 MPa.

Similarly due to the elasticity of the plate-shaped member 212 of the restraint member 210, the restraint member 210 and the fixing member 230 may be configured such that the pressure applied by the restraint tool 200 to the plurality of battery cells 110 is 3 MPa or less in charging the plurality of battery cells 110 of the lithium metal battery 100, and the pressure applied by the restraint tool 200 to the plurality of battery cells 110 is 0.1 MPa or more in discharging the plurality of battery cells 110.

Similarly, with the elasticity of the plate-shaped member 212 of the restraint member 210, the restraint member 210 and the fixing member 230 may be configured such that the pressure applied by the restraint tool 200 to the plurality of battery cells 110 is 2 MPa or less in charging the plurality of battery cells 110 of the lithium metal battery 100, and the pressure applied by the restraint tool 200 to the plurality of battery cells 110 is 0.1 MPa or more in discharging the plurality of battery cells 110.

Similarly, due to the elasticity of the plate-shaped member 212 of the restraint member 210, the restraint member 210 and the fixing member 230 maybe configured such that the pressure applied by the restraint tool 200 to the plurality of battery cells 110 is 5 MPa or less in charging the plurality of battery cells 110 of the lithium metal battery 100, and the pressure applied by the restraint tool 200 to the plurality of battery cells 110 is 0.3 MPa or more in discharging the plurality of battery cells 110.

Similarly, due to the elasticity of the plate-shaped member 212 of the restraint member 210, the restraint member 210 and the fixing member 230 may be configured such that the pressure applied by the restraint tool 200 to the plurality of battery cells 110 is 3 MPa or less in charging the plurality of battery cells 110 of the lithium metal battery 100, and the pressure applied by the restraint tool 200 to the plurality of battery cells 110 is 0.3 MPa or more in discharging the plurality of battery cells 110.

Similarly, due to the elasticity of the plate-shaped member 212 of the restraint member 210, the restraint member 210 and fixing member 230 may be configured such that the pressure applied by the restraint tool 200 to the plurality of battery cells 110 is 2 MPa or less in charging the plurality of battery cells 110 of the lithium metal battery 100, and the pressure applied by the restraint tool 200 to the plurality of battery cells 110 is 0.3 MPa or more in discharging the plurality of battery cells 110.

Similarly, due to the elasticity of the plate-shaped member 212 of the restraint member 210, the restraint member 210 and the fixing member 230 may be configured such that the pressure applied by the restraint tool 200 to the plurality of battery cells 110 is 5 MPa or less in charging the plurality of battery cells 110 of the lithium metal battery 100, and the pressure applied by the restraint tool 200 to the plurality of battery cells 110 is 0.5 MPa or more in discharging the plurality of battery cells 110.

Similarly, due to the elasticity of the plate-shaped member 212 of the restraint member 210, the restraint member 210 and the fixing member 230 may be configured such that the pressure applied by the restraint tool 200 to the plurality of battery cells 110 is 3 MPa or less in charging the plurality of battery cells 110 of the lithium metal battery 100, and the pressure applied by the restraint tool 200 to the plurality of battery cells 110 is 0.5 MPa or more in discharging the plurality of battery cells 110.

Similarly, due to the elasticity of the plate-shaped member 212 of the restraint member 210, the restraint member 210 and the fixing member 230 may be configured such that the pressure applied by the restraint tool 200 to the plurality of battery cells 110 is 2 MPa or less in charging the plurality of battery cells 110 of the lithium metal battery 100, and the pressure applied by the restraint tool 200 to the plurality of battery cells 110 is 0.5 MPa or more in discharging the plurality of battery cells 110.

Table 1 below shows an experimental result obtained by an experiment on a capacity retention of the battery cells 110 after 200 cycles, for each combination of a pressure applied in charging the battery cells 110 and a pressure applied in discharging the battery cells 110. The table 1 shows the experimental result obtained by the experiment on the capacity retention of the battery cells 110 after 200 cycles, for each combination of a pressure applied to the battery cells 110 at an end of charging, at which the pressure becomes the greatest in charging the battery cells 110, and a pressure applied to the battery cells 110 at an end of discharging, at which the pressure becomes the smallest in discharging the battery cells 110. The experiment was performed multiple times for each combination of the pressure applied to the battery cells 110 at the end of charging and the pressure applied to the battery cells 110 at the end of discharging, and "×" is given when a number of cycles is 200 or less in a first place, "Δ" is given when the capacity retention after 200 cycles is less than 70 %, "∘" is given when the capacity retention after 200 cycles is 70 % or more and less than 90 %, and "⊚" is given when the capacity retention after 200 cycles is 90 % or more.

For example, this experimental result shows that the capacity retention of the battery cells 110 is 90 % or more after the battery cells 110 are repeatedly charged/discharged for 200 cycles under a condition where the pressure at the end of charging is 2 MPa, and the pressure at the end of discharging is 0.3 MPa.

This experimental result shows that when a maximum pressure applied in charging is set to 2 MPa or 3 MPa, and a minimum pressure applied in discharging is set to 0.3 MPa, 0.5 MPa, or 0.6 MPa, the capacity retention of the lithium metal battery 100 is 90 % or more after the battery cells 110 are repeatedly charged/discharged for 200 cycles.

**Table 1**

| | | PRESSURE AT END OF DISCHARGING | | | | | |
|---|---|---|---|---|---|---|---|
| | | 0.0 | 0.1 | 0.2 | 0.3 | 0.5 | 0.6 |
| PRESSURE AT END OF CHARGING | 0 | × | × | × | × | × | × |
| | 0.5 | × | × | × | × | × | × |
| | 0.8 | × | △ | △ | △ | - | - |
| | 1 | × | △ | ○ | ○ | ○ | ○ |
| | 2 | × | ○ | ○ | ⊚ | ⊚ | ⊚ |
| | 3 | × | ○ | ○ | ⊚ | ⊚ | ⊚ |
| | 4 | × | △ | ○ | ○ | ○ | ○ |
| | 5 | × | △ | △ | ○ | ○ | ○ |
| | 6 | × | △ | △ | △ | △ | △ |

As shown in Table 1, the pressure in charging is desirably from 0.8 MPa to 6 MPa, more desirably from 1 MPa to 5 MPa, more desirably from 1 MPa to 4 MPa, and more desirably to be 2 MPa or 3 MPa. The pressure in discharging is desirably from 0.1 MPa to 0.6 MPa, more desirably from 0.2 MPa to 0.6 MPa, and more desirably from 0.3 MPa to 0.6 MPa.

As shown in Table 1, it is desirable that the pressure in charging is from 1 MPa to 4 MPa and the pressure in discharging is from 0.2 MPa to 0.6 MPa, and it is more desirable that the pressure in charging is 2 MPa or 3 MPa and the pressure in discharging is from 0.3 MPa to 0.6 MPa. The restraint tool 200 according to the present embodiment allows the lithium metal battery 100 to be restrained to meet such a range condition, thereby contributing to maintaining the performance of the lithium metal battery 100.

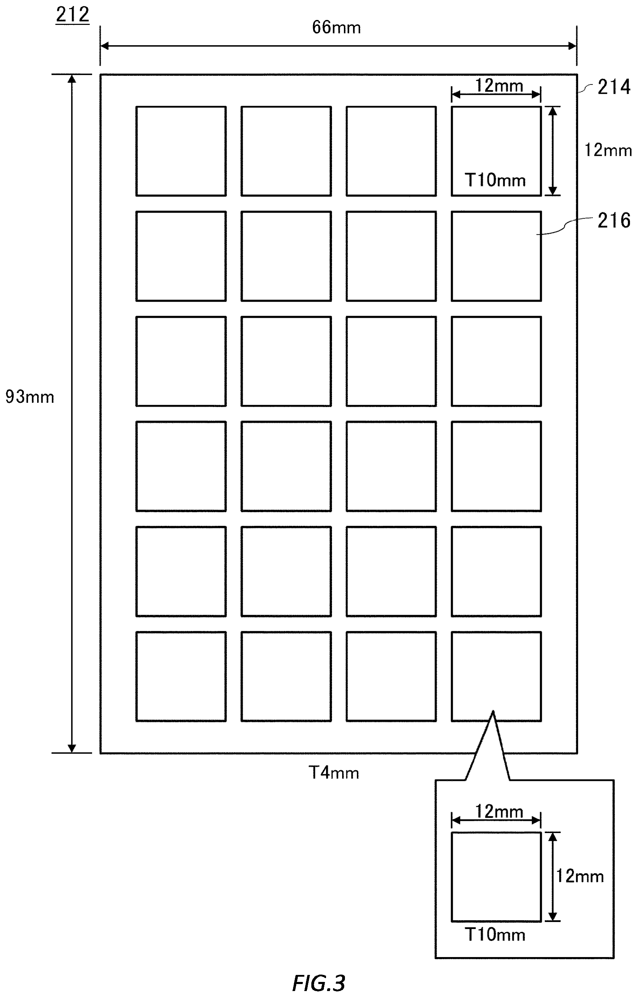

FIG. 3 schematically illustrates an example of the plate-shaped member 212. A dimension of the plate-shaped member 212 illustrated in FIG. 3 is an example. The dimension of the plate-shaped member 212 may be determined according to the material of the plate-shaped member 212, and the like, such that the pressure applied by the restraint tool 200 to the plurality of battery cells 110 is 5 MPa or less in charging the plurality of battery cells 110 of the lithium metal battery 100, and the pressure applied by the restraint tool 200 to the plurality of battery cells 110 is 0.1 MPa or more in discharging the plurality of battery cells 110. The plate-shaped member 222 may have a same configuration as that of the plate-shaped member 212.

In the example illustrated in FIG. 3, the base 214 is 93 mm long, 66 mm wide, and 4 mm high. Each protrusion 216 has a rectangular shape. The protrusion 216 is 12 mm long, 12 mm wide, and 10 mm high. The plurality of protrusions 216 are arranged side by side in a longitudinal direction and a lateral direction. A clearance between each of the plurality of protrusions 216 is 2 mm.

Such structure of the plate-shaped member 212 may allow the plurality of protrusions 216 to be less likely to buckle, so that the battery cells 110 are uniformly pressurized. It may also allow the pressure applied to the lithium metal battery 100 to be appropriately adjusted when the thickness of the lithium metal battery 100 changes. Additionally, due to friction between the plurality of protrusions 216 and the lithium metal battery 100, misalignment of the lithium metal battery 100 is less likely to happen.

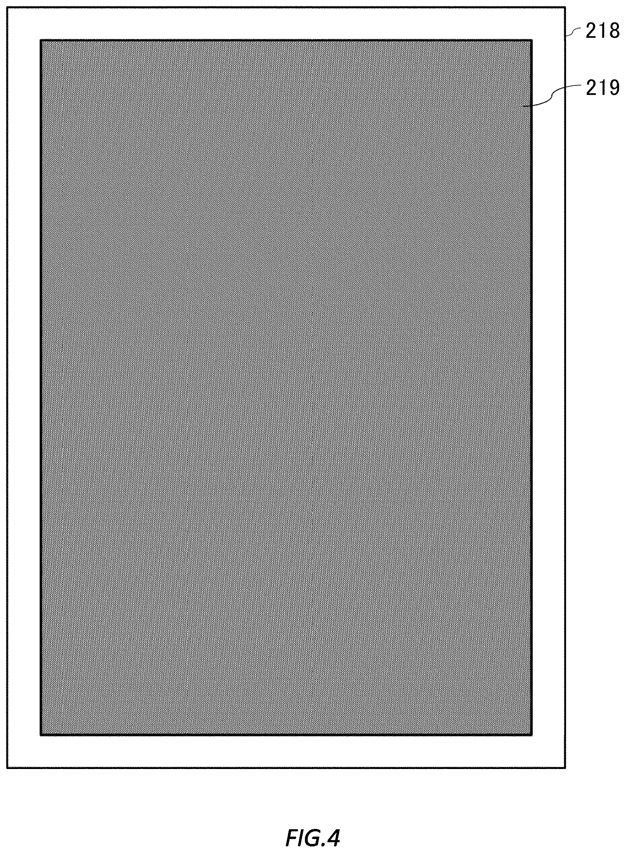

FIG. 4 schematically illustrates an example of the frame member 218. A dimension shown in FIG. 4 is an example and another dimension may be used. The frame member 218 includes a depression 219. A depth of the depression 219 may be the same as a height of the base 214. The depth of the depression 219 may be 1/10 to 1/2 of the height of the base 214. The depth of the depression 219 may be 1/5 to 1/3 of the height of the base 214. The frame member 228 may have a same configuration as that of the frame member 218.

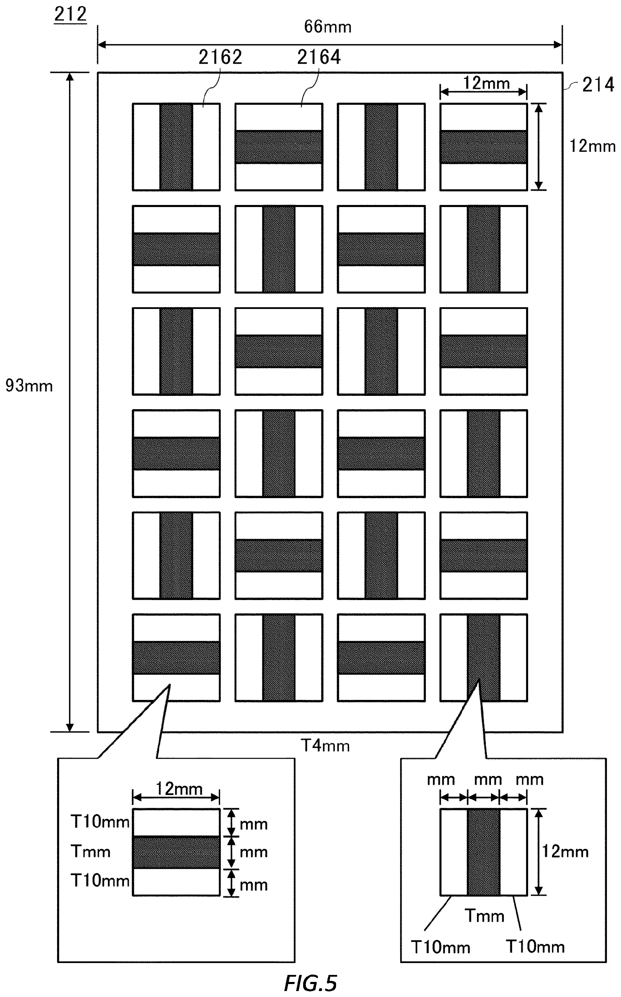

FIG. 5 schematically illustrates an example of the plate-shaped member 212. A dimension of the plate-shaped member 212 shown in FIG. 5 is an example. The dimension of the plate-shaped member 212 may be determined according to the material of the plate-shaped member 212, and the like, such that the pressure applied by the restraint tool 200 to the plurality of battery cells 1 10 is 5 MPa or less in charging the plurality of battery cells 110 of the lithium metal battery 100, and the pressure applied by the restraint tool 200 to the plurality of battery cells 110 is 0.1 MPa or more in discharging the plurality of battery cells 110. The plate-shaped member 222 may have a same configuration as that of the plate-shaped member 212.

In the example illustrated in FIG. 5, the base 214 is 93 mm long, 66 mm wide, and 4 mm high. In the example illustrated in FIG. 5, protrusions 2162, each of which has a rectangular shape and includes a cut in its central portion along the longitudinal direction of the base 214, and protrusions 2164, each of which has a rectangular shape and includes a cut in its central portion along the lateral direction of the base 214, are alternately arranged on the base 214. In the example illustrated in FIG. 5, an overall dimension of each of the protrusions 2162 and the protrusions 2164 is 12 mm long, 12 mm wide, and 10 mm high. A width of the cut is 6 mm and a height of a cut portion is 8 mm. In other words, a depth of the cut is 2 mm. A clearance between the protrusion 2162 and the protrusion 2164 is 2 mm.

As illustrated in FIG. 5, with the protrusions having a cut in different directions being alternately arranged, in addition to an advantage resulting from the structure illustrated in FIG. 3, directionality of rubber deformation can be cancelled, so that the battery cells 110 are less likely to be damaged due to local excessive pressure applied to the battery cells 110.

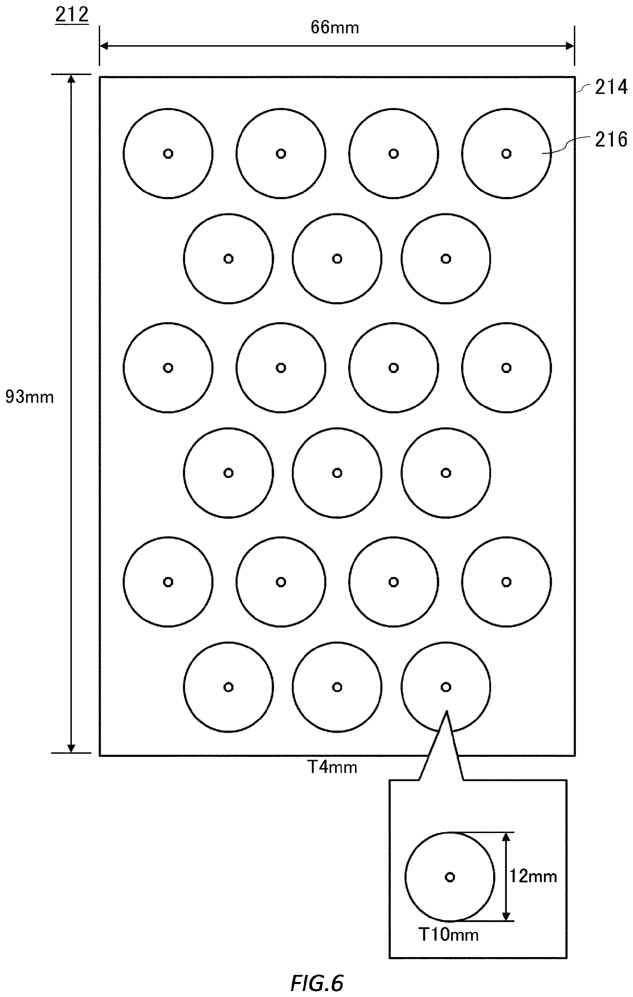

FIG. 6 schematically illustrates an example of the plate-shaped member 212. A dimension of the plate-shaped member 212 shown in FIG. 6 is an example. The dimension of the plate-shaped member 212 may be determined according to the material of the plate-shaped member 212, and the like, such that the pressure applied by the restraint tool 200 to the plurality of battery cells 110 is 5 MPa or less in charging the plurality of battery cells 110 of the lithium metal battery 100, and the pressure applied by the restraint tool 200 to the plurality of battery cells 110 is 0.1 MPa or more in discharging the plurality of battery cells 110. The plate-shaped member 222 may have a same configuration as that of the plate-shaped member 212.

In the example illustrated in FIG. 6, the base 214 is 93 mm long, 66 mm wide, and 4 mm high. Each protrusion 216 has a conical shape. The protrusion 216 may have a curved shape on its vertex side. The protrusion 216 may have a planar shape on its vertex side. The protrusion 216 may have a height-to-diameter ratio ranging from 1:1 to 1:5. The protrusion 216 may have a height-to-diameter ratio of 1:3. A diameter of a bottom surface of the protrusion 216 may be from 5 mm to 30 mm. In the example illustrated in FIG. 6, the diameter of the bottom surface of the protrusion 216 is 12 mm, and the height is 10 mm. The protrusion 216 may have a pyramid-shape.

Such structure of the plate-shaped member 212 may allow the plurality of protrusions 216 to be less likely to buckle, so that the battery cells 110 are uniformly pressurized. It may also allow the pressure applied to the lithium metal battery 100 to be appropriately adjusted when the thickness of the lithium metal battery 100 changes. Additionally, due to friction between the plurality of protrusions 216 and the lithium metal battery 100, misalignment of the lithium metal battery 100 is less likely to happen.

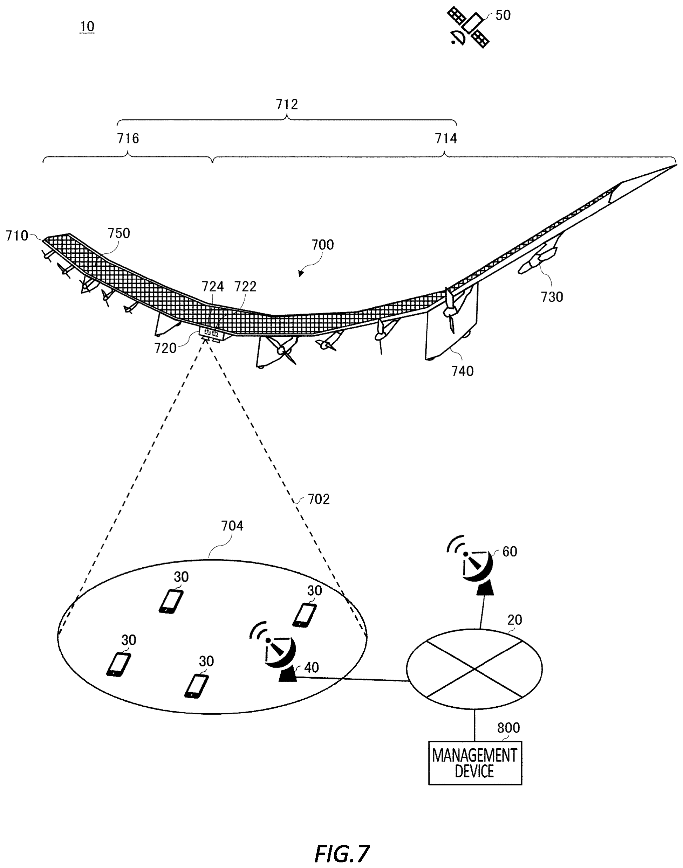

FIG. 7 schematically illustrates an example of a HAPS 700 in which the battery system 10 is installed. The HAPS 700 is a flying body that provides a wireless communication service to a user terminal 30 in a communication area 704 that is formed by irradiating a beam 702 to the ground. The HAPS 700 may be an example of a flying body which includes the battery system 10 and a propulsion force generation device which utilizes electric energy accumulated in the battery system 10 to generate propulsion force.

The HAPS 700 includes a body 710, a central portion 720, a propeller 730, a pod 740, and a solar panel 750. The body 710 has a wing portion 712. The wing portion 712 includes a left-wing portion 714 and a right-wing portion 716.

The battery system 10 is arranged, for example, inside the wing portion 712. The electric energy accumulated in the battery system 10 is utilized by each component included in the HAPS 700.

For example, the electric energy accumulated in the battery system 10 is utilized by a motor of the propeller 730 which generate the propulsion force. As a specific example, a plurality of battery systems 10, which are connected in parallel, are arranged inside the wing portion 712. Among the plurality of battery systems 10, a plurality of battery systems 10 on a left side may be arranged in the left-wing portion 714, and a plurality of battery systems 10 on a right side may be arranged in the right-wing portion 716. Electric power discharged by the plurality of battery systems 10 are utilized by each component included in the HAPS 700. For example, the electric power discharged by the plurality of battery systems 10 is utilized by the motor of the propeller 730.

A flight control unit 722 and a communication control unit 724 are arranged in the central portion 720. The flight control unit 722 uses the electric power discharged by the plurality of battery systems 10 to control flight of the HAPS 700. The communication control unit 724 uses the electric power discharged by the plurality of battery systems 10 to control communication of the HAPS 700.

The flight control unit 722 controls the flight of the HAPS 700 by controlling the rotation of the propeller 730, for example. In addition, the flight control unit 722 may control the flight of the HAPS 700 by changing the angle of a flap or an elevator that are not shown. The flight control unit 722 may include various types of sensors such as a positioning sensor such as a GPS sensor, a gyro sensor, and an acceleration sensor to manage a position, a movement direction, and a movement speed of the HAPS 700.

The communication control unit 724 forms the communication area 704 on the ground by using an SL (Service Link) antenna. The communication control unit 724 forms a service link between the user terminal 30 on the ground by using the SL antenna. The SL antenna may be a multi-beam antenna. The communication area 704 may be a multi-cell.

The communication control unit 724 may form a feeder link between a gateway 40 on the ground by using an FL (Feeder Link) antenna. The communication control unit 724 may access a network 20 via the gateway 40.

The communication control unit 724 may communicate with a communication satellite 50 by using a satellite communication antenna. The communication control unit 724 may access the network 20 via the communication satellite 50 and a satellite communication station 60.

The user terminal 30 may be any communication terminal as long as it can communicate with the HAPS 700. For example, the user terminal 30 is a mobile phone such as a smartphone. The user terminal 30 may be a tablet terminal, a PC (Personal Computer), and the like. The user terminal 30 may also be a so-called IoT, or Internet of Thing, device. The user terminal 30 may include anything which corresponds to a so-called IoE, or Internet of Everything.

The HAPS 700 relays a communication between the network 20 and the user terminal 30, for example, via the feeder link or the communication satellite 50, and the service link. The HAPS 700 may provide a wireless communication service to the user terminal 30 by relaying the communication between the user terminal 30 and the network 20.

The network 20 includes a mobile communication network. The mobile communication network may conform to any of a long term evolution (LTE) communication standard, a 5th generation (5G) communication standard, a 3rd generation (3G) communication standard, or a communication standard after a 6th generation (6G) communication standard. The network 20 may include the Internet.

For example, the HAPS 700 transmits data received from the user terminal 30 in the communication area 704 to the network 20. In addition, for example, when the HAPS 700 receives data addressed to the user terminal 30 in the communication area 704, via the network 20, the HAPS 700 transmits the data to the user terminal 30.

The HAPS 700 maintains the communication area 704 in a specific area on the ground while circulating a predetermined flight path in the stratosphere, for example. The HAPS 700 stores the electric power generated by the solar panel 750 during daytime in the plurality of battery systems 10 and uses the electric power of the plurality of battery systems 10 during nighttime to maintain the flight in the stratosphere. For example, during the daytime, the HAPS 700 charges the plurality of battery systems 10 while ascending to store potential energy, and during the nighttime, it uses the electric power in the battery system 10 as appropriate to operate the propeller 730 and the like while gradually descending, thereby maintaining the flight in the stratosphere.

The management device 800 manages a plurality of the HAPS 700. The management device 800 may communicate with the HAPS 700 via the network 20 and the gateway 40. The management device 800 may communicate with the HAPS 700 via the network 20, the satellite communication station 60, and the communication satellite 50.

The management device 800 controls the HAPS 700 by transmitting an instruction. The management device 800 may cause the HAPS 700 to circle over a target area such that the target area on the ground is covered by the communication area 704. For example, the HAPS 700 maintains the feeder link with the gateway 40 by adjusting an orientation direction of the FL antenna while flying in a circular orbit over the target area, and maintains the coverage of the target area by the communication area 704 by adjusting an orientation direction of the SL antenna.

While the embodiments of the present invention have been described above, the technical scope of the present invention is not limited to the scope of the above-described embodiments. It is apparent to persons skilled in the art that various alterations or improvements can be made to the above-described embodiments. It is also apparent from the described scope of the claims that the embodiments in which such alterations or improvements are made can be included in the technical scope of the present invention.

It should be noted that the operations, procedures, steps, stages or the like of each process performed by an apparatus, system, program, and method shown in the scope of the claims, specification, and drawings can be performed in any order as long as the order is not indicated by "prior to," "before," or the like and as long as the output from a previous process is not used in a later process. Even if the process flow is described by using phrases such as "first", "then" or the like in the scope of the claims, specification, and drawings, it does not necessarily mean that the process must be performed in this order.

### EXPLANATION OF REFERENCES

10: battery system; 20: network; 30: user terminal; 40: gateway; 50: communication satellite; 60: satellite communication station; 100: lithium metal battery; 110: battery cell; 200: restraint tool; 210: restraint member; 212: plate-shaped member; 214: base; 216: protrusion; 2162: protrusion; 2164: protrusion; 218: frame member; 219: depression; 220: restraint member; 222: plate-shaped member; 224: base; 226: protrusion; 228: frame member; 230: fixing member; 700: HAPS; 702: beam; 704: communication area; 710: object body; 712: wing portion; 714: left-wing portion; 716: right-wing portion; 720: central portion; 722: flight control unit; 724: communication control unit; 730: propeller; 740: pod; 750: solar panel; 800: management device.

## Claims

1. A restraint tool which restrains a lithium metal battery comprising a plurality of battery cells, comprising:
a restraint member which comprises:
a plate-shaped member which is made of a rubber-based material and comprises a plate-shaped base and a plurality of protrusions on the base; and
a frame member into which the plate-shaped member is fitted; and
a fixing member which fixes the plate-shaped member fitted into the frame member in a pressurized state in which the plate-shaped member is pressed against the lithium metal battery.

2. The restraint tool according to claim 1, wherein
each of the plurality of protrusions has a conical shape.

3. The restraint tool according to claim 2, wherein
each of the plurality of protrusions has a conical shape with a height-to-diameter ratio ranging from 1:1 to 1:5.

4. The restraint tool according to claim 1, wherein
a protrusion which has a rectangular shape and comprises a cut in its central portion along a longitudinal direction of the base, and a protrusion which has a rectangular shape and comprises a cut in its central portion along a lateral direction of the base are alternately arranged on the base.

5. The restraint tool according to any one of claim 1 to 4, wherein
due to elasticity of the plate-shaped member, a pressure applied by the restraint tool to the plurality of battery cells in charging the plurality of battery cells is 5 MPa or less, and a pressure applied by the restraint tool to the plurality of battery cells in discharging the plurality of battery cells is 0.1 MPa or more.

6. The restraint tool according to claim 5, wherein
the pressure applied by the restraint tool to the plurality of battery cells in charging the plurality of battery cells is 3 MPa or less.

7. The restraint tool according to claim 6, wherein
the pressure applied by the restraint tool to the plurality of battery cells in charging the plurality of battery cells is 2 MPa or less.

8. The restraint tool according to any one of claim 5 to 7, wherein
the pressure applied by the restraint tool to the plurality of battery cells in discharging the plurality of battery cells is 0.3 MPa or more.

9. The restraint tool according to claim 8, wherein
the pressure applied by the restraint tool to the plurality of battery cells in discharging the plurality of battery cells is 0.5 MPa or more.

10. The restraint tool according to any one of claim 1 to 9, wherein
the restraint member comprises a first restraint member which comprises a first plate-shaped member and a first frame member, and a second restraint member which comprises a second plate-shaped member and a second frame member, and
the fixing member fixes the lithium metal battery in a pressurized state in which the lithium metal battery is sandwiched between the first restraint member and the second restraint member.

11. A battery system comprising:
the restraint tool according to any one of claim 1 to 10, and
the lithium metal battery.

12. A flying body comprising:
the battery system according to claim **11;** and
a propulsion force generation device which utilizes electric energy accumulated in the battery system to generate propulsion force.
